# EUROPÄISCHE PATENTSCHRIFT

(11) **EP 0 881 200 B1**
(45) Veröffentlichungstag und Bekanntmachung des Hinweises auf die Patenterteilung: **11.10.2000**
(21) Anmeldenummer: 98108959.2
(22) Anmeldetag: 16.05.1998
(51) Int. Cl.: C04B 35/66

(54) **Bodenauskleidung für Elektrolysezellen und Verfahren zu ihrer Herstellung**
Lining for electrolytic cell
Revêtement de cuve d'électrolyse

(30) Priorität: 30.05.1997 DE 19722788
(43) Veröffentlichungstag der Anmeldung: 02.12.1998
(73) Patentinhaber: Aluminium-Salzschlacke Aufbereitungs GmbH, 44536 Lünen (DE)
(72) Erfinder: Feige, Reinhard, 53225 Bonn (DE); Merker, Gerhard, 35519 Rockenberg (DE)
(74) Vertreter: Müller-Wolff, Thomas, Dipl.-Ing.

(56) Entgegenhaltungen:
- EP-A- 0 318 305
- EP-A- 0 726 233
- DE-A- 4 141 186

## Beschreibung

Die Erfindung betrifft eine Bodenauskleidung für Elektrolysezellen, insbesondere für Aluminiumelektrolysezellen der Primärgewinnung als auch der Sekundär-Raffination, wobei der Grundkörper der Elektrolysezellen aus Stahlwannen gebildet wird sowie ein Verfahren zu ihrer Herstellung.

Nach dem Stand der Technik wird Aluminiummetall durch Reduktion von metallurgischem Aluminiumoxid mittels Schmelzelektrolyse bei etwa 950 °C als Hüttenaluminium erzeugt. Hochreines Aluminiummetall wird aus Hüttenaluminium durch Raffinationselektrolyse bei etwa 800 °C gewonnen. In beiden Prozessen werden fluoridhaltige Salzschmelzen als Elektrolyt verwendet. Die Elektrolysezelle besteht in beiden Prozessen aus einer Stahlwanne mit Abmessungen von ca. 10 m Länge und ca. 5 m Breite, deren Bodenfläche mit Kohlenstoffblöcken ausgelegt ist, welche gleichzeitig als Elektroden fungieren. Unter den Bodenkohlen befindet sich eine wärmeisolierende Auskleidung, die in der Regel aus etwa 3 Lagen dichter Schamottesteine (im heißeren Bereich) und etwa 2 Lagen hochporöser Molersteine, Vermiculitsteine oder Calciumsilikatplatten (im darunter liegenden kälteren Bereich) besteht.

Anstelle einer Steinauskleidung sind auch Bodenisolierungen bekannt, bei denen metallurgisches Aluminiumoxid-Pulver oder feuerfeste Massen auf Basis von Schamotte oder Olivin in die Elektrolysewannen eingestampft werden. Gestampfte Isolierungen haben den Vorteil gegenüber Steinen und Platten, daß die monolithische Stampfung keine Fugen hat, welche der Elektrolytschmelze die Infiltration der Isolierung erleichtern. Das Einbringen einer Stampfung beansprucht auch weniger Zeit und Arbeitsaufwand. Außerdem läßt sich eine gestampfte Isolierung im Gegensatz zu Steinen, die mit Mörtel fest vermauert werden, nach dem Ende der Lebensdauer der Elektrolysezellen leichter und schneller wieder ausbrechen und erneuern.

Beim Betrieb einer Zelle infiltrieren schmelzeflüssige und gasförmige Elektrolytbestandteile die Bodenisolierung, füllen dort mit der Zeit die offenen Poren und führen zu einer mineralogischen Umwandlung des Isoliermaterials. Dadurch wird die thermische Isolierfähigkeit der Bodenauskleidung zunehmend verschlechtert und die Lebensdauer der Elektrolysezelle begrenzt. Bei der Primärelektrolyse läßt sich eine gebrauchte Bodenisolierung in Form einer Stampfung aus metallurgischen Aluminiumoxid, trotz Durchtränkung mit Elektrolytschmelze, komplett als Aluminiumoxid-Quelle weiterverwenden. Dagegen kann eine verbrauchte Bodenauskleidung auf Basis von Schamottesteinen oder feuerfesten Massen nur noch teilweise aufbereitet und anderweitig verwertet werden.

Im Vergleich zu Schamottesteinen oder einer feuerfesten Stampfmasse auf Basis von Schamotte oder Olivin (Rohdichte ca. 2 - 2,5 g/cm³, offene Porosität ca. 20 %) hat eine Stampfung aus metallurgischem Aluminiumoxid-Pulver (Stampfdichte ca. 1,0 g/cm³, offene Porosität ca. 70 %) aufgrund ihrer höheren Porosität nach der Inbetriebnahme einer Elektrolysezelle zunächst eine bessere Wärmeisolierfähigkeit. Die strukturelle Veränderung durch Infiltration von Schmelze, und damit die Verschlechterung der Wärmeleitfähigkeit, ist jedoch bei einer Aluminiumoxid-Stampfung aufgrund deren höherer Ausgangsporosität stärker als bei Steinen.

Es gibt verschiedene Verfahren, die Infiltration der Bodenisolierung zu hemmen. So werden chemische Sperrschichten auf Basis von SiO₂-haltigen Schmelzen verwendet, die durch die Reaktion von Elektrolytbestandteilen mit SiO₂-haltigen Bestandteilen der Bodenauskleidung gebildet werden. Außerdem sind physikalische Infiltrationssperren in Form von Stahlplatten bekannt, die zwischen die Bodenkohlen und die Bodenisolierung gelegt werden. In DE 43 36 024 wird die Bodenisolierung einer Aluminiumelektrolysezelle beschrieben, bei der zur Verringerung der Infiltrierbarkeit die offenen Poren von Schamottesteinen mit Teer getränkt werden.

Die Erfindung betrifft die Verbesserung der Bodenauskleidung von Elektrolysezellen sowohl für die primäre Gewinnung als auch für die sekundäre Raffination von Aluminium. Die Verbesserung betrifft die einfachere Einbringbarkeit des Isoliermaterials in die Zellenwannen, die größere Infiltrations- und Reaktionsbeständigkeit gegen Elektrolytschmelze sowie die leichtere Verwertbarkeit der verbrauchten Bodenisolierung. Bei dieser verbesserten Bodenauskleidung handelt es sich um eine gestampfte Wannenfüllung aus ungebrannten, vorkompaktierten Formkörpern (Pellets, Briketts oder Steinen) auf Basis der hochtonerdehaltigen Pulverprodukte, die bei der Aufarbeitung von Aluminium-Krätzen und -Salzschlacken als Rückstände anfallen.

Aufgabe der vorliegenden Erfindung ist daher die Verbesserung der Bodenauskleidung von Aluminium-Elektrolysezellen in bezug auf eine einfachere Einbringbarkeit des Isoliermaterials in die Zellenwannen, eine größere Infiltrations- und Reaktionsbeständigkeit gegen Elektrolytschmelze sowie eine leichtere Verwertbarkeit der verbrauchten Bodenisolierung.

Die Aufgabe wird erfindungsgemäß durch die in den Patentansprüchen 1 und 7 angegebenen Merkmale gelöst. Gemäß einer bevorzugten Ausführungsform ist die Wannenauskleidung eine monolithische Stampfung aus ungebrannten und/oder kalzinierten Formkörpern, z.B. Kugel-Pellets, Eier-Briketts oder Normalformat-Steinen, auf Basis der hochtonerdehaltigen, feinkörnigen Pulver, die bei der Aufarbeitung von Krätzen und Salzschlacken der Aluminiumindustrie als Reststoffe anfallen.

"Ungebrannt und/oder kalziniert" bedeutet, daß die Formkörper getrocknet und so weit thermisch behandelt werden, daß sie
a) zwar mechanisch ausreichend stabil sind, um transportiert werden zu können,
b) aber noch nicht fest gesintert sind, damit sie sich leicht verstampfen lassen,
c) eine Glühverlust-Feuchte von weniger als 5 % aufweisen. Sonst wird beim Betrieb der Elektrolysewanne zuviel Feuchtigkeit freigesetzt, so daß Gefahr einer Rißbildung besteht.

Diese hochtonerdehaltigen, feinkörnigen Pulver weisen die folgende chemische Zusammensetzung - bezogen auf getrocknete Substanzen - auf:

| | |
|---|---|
| Al₂O₃ | 40 - 90 % |
| AlN | 0,1 - 25 % |
| MgO | 4 - 20 % |
| SiO₂ | 0,5 - 15 % |
| CaO | 0,1 - 15 % |
| Al (metallisch) | 0,1 - 10 % |
| Si (metallisch) | 0,1 - 10 % |
| Fe₂O₃ | 0,1 - 5 % |
| C | max. 5 % |
| F | max. 5 % |
| Na₂O | 0,1 - 5 % |
| K₂O | 0,1 - 2 % |
| TiO₂ | 0,1 - 2 % |
| andere | max. 5 % |
| Glühverlust | max. 10 %. |

Gemäß einer weiteren bevorzugten Ausführungsform weisen die Teilchen des feinkörnigen Pulverprodukts einen Teilchendurchmesser von 90 % < 200 µm auf. Im Tiegelprüftest hat sich überraschenderweise gezeigt, daß diese Pulver in kompaktierter Form von fluoridhaltiger Elektrolytschmelze wesentlich weniger infiltriert und angegriffen werden als die bisher üblichen Bodenisoliermaterialien. Die größere Infiltrations- und Reaktionsbeständigkeit gegen Elektrolytschmelze der hochtonerdehaltigen, feinkörnigen Pulver aus der Aufarbeitung von Krätzen und Salzschlacken der Aluminiumindustrie, beruht vermutlich auf der in diesen Pulverpartikeln vorhandenen idealen Kombination von chemischer und mineralogischer Zusammensetzung, mechanischer Härte und Teilchenvergrößerung. Das Al₂O₃ liegt in Form der mineralischen Hartstoffe Korund und MgO-Spinell vor; daneben sind mineralisch weiche Bestandteile in Form von CaF₂ und metallischem Aluminium vorhanden.

Ein besonderer Vorteil ist die leichte Weiterverwertbarkeit gebrauchter Bodenisolierungen, die auf Basis der hochtonerdehaltigen, feinkörnigen Pulver aus der Aufarbeitung von Krätzen und Salzschlacken der Aluminiumindustrie gestampft wurden. Sie können mitsamt den infiltrierten Elektrolytbestandteilen wieder in die allgemeine Aufarbeitung von Krätzen und Salzschlacken der Aluminiumindustrie zurückgegeben werden.

Zur Herstellung der Bodenisolierung werden die hochtonerdehaltigen Pulver aus der Aufarbeitung von Aluminium-Krätzen und -Salzschlacken, die in der Regel bereits in der idealen Teilchengröße vorliegen (maximaler Durchmesser 200 µm, mittlerer Durchmesser 5 - 30 µm), zu Kugel-Pellets, Eier-Briketts oder Normalformat-Steinen geformt. Bei der Formgebung ist es von Vorteil, dem Pulver ein Bindemittel zuzusetzen, wie z.B. Wasser, Zement, Ton, Aluminiumphosphat oder Methylcellulose.

Die Formkörper werden in die Elektrolysewanne eingefüllt und die Füllung wird durch Stampfen verdichtet, z.B. mit einem beim Straßenbau verwendeten Flächenrüttler. Da die Bodenauskleidung bei Inbetriebnahme der Elektrolysezelle möglichst trocken sein muß, und auch beim Betrieb keine Feuchte freigesetzt werden darf, ist es erforderlich, die Formkörper vor dem Einfüllen in die Elektrolysewanne so weit thermisch vorzubehandeln, daß die Glühverlust-Feuchte möglichst gering ist. In Versuchen wurde ermittelt, daß dafür eine Temperatur bis 700 °C ausreicht. Die Trocken- oder Glühbehandlung kann z.B. in einem Kammerofen erfolgen.

### Beispiele

Die Packungsdichte einer gestampften Füllung von Formkörpern auf Basis eines hochtonerdehaltigen, feinkörnigen Pulvers aus der Aufarbeitung von Krätzen und Salzschlacken der Aluminiumindustrie im Vergleich mit nach dem Stand der Technik üblichen Stampfungen aus metallurgischem Aluminiumoxid-Pulver und handelsüblicher Feuerfestmasse wurde durch Wiegen und Ausmessen von Stampfkörpern bestimmt, die mit einer aus der Gießereitechnik bekannten "Fischer-Ramme" verdichtet wurden.

Die Beständigkeit dieser Stampfungen gegen Elektrolytschmelze wurde mit einem Tiegeltest ermittelt. Dabei wurde zur Herstellung des Tiegels von einem Schamottestein, wie er üblicherweise zur Bodenisolierung in Aluminiumelektrolysezellen eingesetzt wird, ein Stück von jeweils 12 cm Breite und Länge und 7 cm Höhe abgesägt und darin ein rundes Loch von je 5 cm Durchmesser und Tiefe hineingebohrt. In die Tiegelbohrung wurde eine mit 600 bar gepreßte Tablette von 5 cm Durchmesser und 2,5 cm Dicke, bestehend aus dem zu prüfenden Bodenisoliermaterial eingesetzt. Darüber wurde eine gleichgroße Tablette aus Schmelzeelektrolyt, wie er bei der Primärelektrolyse von Aluminium verwendet wird, gelegt. Die Bohrung wurde anschließend mit einer 1 cm dicken Platte, die ebenfalls aus dem Schamottesteinmaterial gesägt wurde, abgedeckt. Nach Erhitzen in einem Laborkammerofen auf 950 °C, mit einer Haltezeit von 24 Stunden, wurde der Tiegel abgekühlt und durchgesägt. Dabei zeigte sich, inwieweit die Prüftablette von der Elektrolytschmelze infiltriert wurde.

### Erfindungsbeispiel

Das in den folgenden Beispielen verwendete hochtonerdehaltige Pulver aus der Aufarbeitung von Aluminium-Krätzen und -Salzschlacken hatte folgende Eigenschaften:

| Chemische Zusammensetzung | | |
|---|---|---|
| Al₂O₃ | % | 65 |
| MgO | % | 8,6 |
| SiO₂ | % | 7 |
| CaO | % | 3 |
| F | % | 2,2 |
| Fe₂O₃ | % | 1,6 |
| C | % | 1,2 |
| Na₂O | % | 1 |
| NH₃ | % | 0,5 |
| K₂O | % | 0,4 |
| Glühverlust | % | 8 |

| Kristalline Hauptbestandteile | | |
|---|---|---|
| Korund | | Al₂O₃ |
| Spinell | | MgO.Al₂O₃ |
| Flußspat | | CaF₂ |

| Teilchengröße | | |
|---|---|---|
| < 200 µm | % | 90 |
| d50 | µm | 15 |

| Erfindungsbeispiel | Stampf-Material | Packungsdichte g/cm³ | Tiegeltest Infiltration |
|---|---|---|---|
| | Formkörper (Eierbriketts) aus hochtonerdehaltigem Pulver mit 10 % Bindeton | 1,8 | gering |
| 1 | metallurgisches Al₂O₃-Pulver | 1,1 | stark |
| 2 | Olivin-Stampfmasse | 2,4 | gering |

Wie die Beispiele im Vergleich zeigen, ist die Infiltration von Elektrolytschmelze bei einer gestampften Füllung von Formkörpern aus hochtonerdehaltigem, feinkörnigem Pulver aus der Aufarbeitung von Krätzen und Salzschlacken der Aluminiumindustrie anstelle von metallurgischen Aluminiumoxid-Pulver ähnlich gering wie mit einer handelsüblichen Olivin-Stampfmasse, allerdings bei deutlich geringerer Packungsdichte und damit besserer Wärmeisolierwirkung und weniger Materialverbrauch.

## Patentansprüche

1. Bodenauskleidung für Elektrolysezellen, insbesondere für Aluminiumelektrolysezellen der Primärgewinnung als auch der Sekundär-Raffination, wobei der Grundkörper der Elektrolysezellen aus Stahlwannen gebildet wird,
dadurch gekennzeichnet,
daß zumindest ein Teil der Bodenauskleidung aus einer monolithischen Stampfung besteht, enthaltend ein hochtonerdehaltiges, feinkörniges Pulverprodukt aus der Aufarbeitung von Krätzen und Salzschlacken der Aluminiumindustrie, das zumindest die folgenden Bestandteile, bezogen auf das Gewicht der getrockneten Substanz, aufweist:
| | |
|---|---|
| Al₂O₃ | 40 - 90 % |
| AlN | 0,1 - 25 % |
| MgO | 4 - 20 % |
| SiO₂ | 0,5 - 15 % |
| CaO | 0,1 - 15 % |
| Al (metallisch) | 0,1 - 10 % |
| Si (metallisch) | 0,1 - 10 % |
| Fe₂O₃ | 0,1 - 5 % |
| C | max. 5 % |
| F | max. 5 % |
| Na₂O | 0,1 - 5 % |
| K₂O | 0,1 - 2 % |
| TiO₂ | 0,1 - 2 % |
| andere | max. 5 % |
| Glühverlust | max. 10 %. |

2. Bodenauskleidung nach Anspruch 1,
dadurch gekennzeichnet,
daß die Bodenauskleidung schichtweise aus ungebrannten und/oder kalzinierten Formkörpern besteht.

3. Bodenauskleidung nach einem der vorhergehenden Ansprüche,
dadurch gekennzeichnet,
daß in der Bodenauskleidung folgende mineralogische Hauptphasen vorliegen:
| | |
|---|---|
| Korund | α-Al₂O₃ |
| Spinell | MgO x Al₂O₃, |
wobei der Spinellanteil 15 - 70 Gew.-%, bezogen auf das Pulverprodukt in der Bodenauskleidung besteht.

4. Bodenauskleidung nach einem der vorhergehenden Ansprüche,
dadurch gekennzeichnet,
daß 90 % der Teilchen des feinkörnigen Pulverprodukts einen Teilchendurchmesser < 200 µm aufweisen.

5. Bodenauskleidung nach einem der vorhergehenden Ansprüche,
dadurch gekennzeichnet,
daß das feinkörnige Pulverprodukt einen mittleren Teilchendurchmesser von 5- 30 µm besitzt.

6. Bodenauskleidung nach einem der vorhergehenden Ansprüche,
dadurch gekennzeichnet,
daß die Bodenauskleidung aus einem Schichtenverbund von monolithisch gestampften Formkörpern und weiteren feuerfesten Isoliermaterialien besteht.

7. Verfahren zur Herstellung einer Bodenauskleidung für eine Elektrolysezelle, wobei der Grundkörper der Elektrolysezelle aus einer Stahlwanne gebildet wird,
dadurch gekennzeichnet,
a) daß aus der Aufbereitung von Krätzen und Salzschlacken der Aluminiumindustrie durch Mahlung, Laugung, Filtration und/oder thermische Behandlung ein feinkörniges Pulverprodukt mit folgender chemischer Zusammensetzung - bezogen auf das Gewicht der getrockneten Substanz - hergestellt wird:
| | |
|---|---|
| Al₂O₃ | 40 - 90 % |
| AlN | 0,1 - 25 % |
| MgO | 4 - 20 % |
| SiO₂ | 0,5 - 15 % |
| CaO | 0,1 - 15 % |
| Al (metallisch) | 0,1 - 10 % |
| Si (metallisch) | 0,1 - 10 % |
| Fe₂O₃ | 0,1 - 5 % |
| C | max. 5 % |
| F | max. 5 % |
| Na₂O | 0,1 - 5 % |
| K₂O | 0,1 - 2 % |
| TiO₂ | 0,1 - 2 % |
| andere | max. 5 % |
| Glühverlust | max. 10 %. |
b) daß das Pulverprodukt zu Formkörpern pelletiert, brikettiert oder extrudiert wird,
c) daß die Formkörper getrocknet oder kalziniert mit weniger als 5 % Glühverlust-Feuchte in die Elektrolysewanne eingefüllt und durch Stampfen oder Rütteln verdichtet werden.

8. Verfahren nach Anspruch 7,
dadurch gekennzeichnet,
daß die thermische Behandlung durch Trocknung, Kalzination und/oder Sinterung erfolgt.

9. Verfahren nach einem der vorhergehenden Ansprüche,
dadurch gekennzeichnet,
daß das Pulverprodukt zu Teilchen mit maximalem Durchmesser von 200 µm und mittlerem Durchmesser von 5 -30 µm zerkleinert wird.

10. Verfahren nach einem der vorhergehenden Ansprüche,
dadurch gekennzeichnet,
daß das Pulverprodukt in einer Kugelmahlanlage zerkleinert wird.

11. Verfahren nach einem der vorhergehenden Ansprüche,
dadurch gekennzeichnet,
daß bei der Herstellung der Formkörper anorganische und/oder organische Bindemittel verwendet werden.

12. Verfahren nach Anspruch 11,
dadurch gekennzeichnet,
daß als Bindemittel Wasser, Zement, Ton, Aluminiumphosphat und/oder Methylcellulose verwendet wird.

13. Verfahren nach einem der Ansprüche 11 und 12,
dadurch gekennzeichnet,
daß als Bindemittel 5 - 20 % Ton verwendet wird.

14. Verfahren zur Aufarbeitung einer gebrauchten Bodenauskleidung einer Aluminiumelektrolysezelle nach einem der Ansprüche 1-6,
dadurch gekennzeichnet,
daß die gebrauchte Bodenauskleidung aus der Elektrolysezelle ausgebrochen und nach einer Mahlung, Laugung, Filtration, Trocknung, Kalzination und/oder Sinterung erneut ein feinkörniges Pulverprodukt gewonnen wird, bei dem MgO mineralogisch als Spinell gebunden vorliegt.

## Claims

1. A base lining for electrolysis cells, especially for aluminium electrolysis cells for primary recovery purposes but also for secondary refining purposes, with the body of the electrolysis cell being formed of steel baths,
characterised in
that at least part of the base lining results from monolithic tamping, containing a highly aluminiferous, fine-grain powder product which results from the processing of blue dust and salt slag of the aluminium industry and which comprises at least the following constituents with reference to the weight of the dry substance:
| | |
|---|---|
| Al₂O₃ | 40 - 90 % |
| AlN | 0.1 - 25 % |
| MgO | 4 - 20% |
| SiO₂ | 0.5 - 15 % |
| CaO | 0.1 - 15 % |
| Al (metallic) | 0.1 - 10 % |
| Si (metallic) | 0.1 - 10 % |
| Fe₂O₃ | 0.1 - 5 % |
| C | max. 5 % |
| F | max 5 % |
| Na₂O | 0.1 - 5 % |
| K₂O | 0.1 - 2 % |
| TiO₂ | 0.1 - 2 % |
| other | max. 5 % |
| annealing losses | max. 10 % |

2. A base lining according to claim 1,
characterised in
that the base lining consists of layers of unfired and/or calcinated formed members.

3. A base lining according to any one of the preceding claims,
characterised in
that the following mineralogical main phases are contained in the base lining:
| | |
|---|---|
| corundum | α-Al₂O₃ |
| spinel | MgO X Al₂O₃ |
with the spinel content amounting to 15 to 70 % by weight with reference to the powder product in the base lining.

4. A base lining according to any one of the preceding claims,
characterised in
that 90 % of the particles of the fine-grain powder product comprise a particle diameter < 200 µ.

5. A base lining according to any one of the preceding claims,
characterised in
that the fine-grain powder product has a mean particle diameter of 5 - 30 µm.

6. A base lining according to any one of the preceding claims,
characterised in
that the base lining consists of bonded layers of monolithically stamped formed members and further fire-proof insulating materials.

7. A method of producing a base lining for an electrolysis cell, with the body of the electrolysis cell being formed of a steel bath,
characterised in
a) that by processing blue dust and salt slag of the aluminium industry by grinding, leaching, filtration and/or thermal treatment, there is produced a fine-grain powder product with the following chemical composition, with reference to the dry substance:
| | |
|---|---|
| Al₂O₃ | 40 - 90 % |
| AlN | 0.1 - 25 % |
| MgO | 4 - 20% |
| SiO₂ | 0.5 - 15 % |
| CaO | 0.1 - 15 % |
| Al (metallic) | 0.1 - 10 % |
| Si (metallic) | 0.1 - 10 % |
| Fe₂O₃ | 0.1 - 5 % |
| C | max. 5 % |
| F | max 5 % |
| Na₂O | 0.1 - 5 % |
| K₂O | 0.1 - 2 % |
| TiO₂ | 0.1 - 2 % |
| other | max. 5 % |
| annealing losses | max. 10 % |
b) that the powder product is pelleted, briquetted or extruded into formed members,
c) that the formed members, either in a dried or calcinated condition with an annealing loss moisture of less than 5 %, are filled into the electrolysis bath and are compacted by stamping or jolting.

8. A method according to claim 7,
characterised in
that the thermal treatment takes place by drying, calcination and/or sintering.

9. A method according to any one of the preceding claims,
characterised in
that the powder products are crushed into particles with a maximum diameter of 200 µm or a mean diameter of 5 - 30 µm.

10. A method according to any one of the preceding claims,
characterised in
that the powder product is crushed in a ball grinding machine.

11. A method according to any one of the preceding claims,
characterised in
that when producing formed members, use is made of inorganic and/or organic bonding agents.

12. A method according to claim 11,
characterised in
that the bonding agents used are water, cement, clay, aluminium phosphate and/or methyl cellulose.

13. A method according to any one of claims 11 and 12,
characterised in
that the bonding agent used is 5 - 20% clay.

14. A method of processing a used base lining of an aluminium electrolysis cell according to any one of claims 1 to 6,
characterised in
that the used base lining is broken out of the electrolysis cell and that after grinding, leaching, filtration, drying, calcination and/or sintering of same, there is again obtained a fine-grain powder product wherein MgO is mineralogically present in the form of bonded spinel.

## Revendications

1. Garnissage de fond pour des cuves d'électrolyse, en particulier pour des cuves d'électrolyse de l'aluminium de la production primaire et aussi de l'affinage secondaire, où le corps de base des cuves d'électrolyse est formé par des caissons en acier, caractérisé en ce qu'une partie au moins du garnissage de fond consiste en un damage monolithique contenant un produit pulvérulent à grains fins et à haute teneur en alumine provenant du traitement des crasses et scories salines de l'industrie de l'aluminium, qui comporte au moins les constituants suivants, par rapport à la masse de la substance séchée :
| | |
|---|---|
| Al₂O₃ | 40 - 90% |
| AlN | 0,1 - 25% |
| MgO | 4 - 20% |
| SiO₂ | 0,5 - 15% |
| CaO | 0,1 - 15% |
| Al (métallique) | 0,1 - 10% |
| Si (métallique) | 0,1 - 10% |
| Fe₂O₃ | 0,1 - 5% |
| C | max. 5% |
| F | max. 5% |
| Na₂O | 0,1 - 5% |
| K₂O | 0,1 - 2% |
| TiO₂ | 0,1 - 2% |
| autres | max. 5% |
| perte au feu | max. 10%. |

2. Garnissage de fond selon la revendication 1 caractérisé en ce que le garnissage de fond consiste, sous forme de couches, en corps mis en forme non cuits et/ou calcinés.

3. Garnissage de fond selon l'une des revendications précédentes caractérisé en ce que les phases minéralogiques principales suivantes sont présentes dans le garnissage de fond :
| | |
|---|---|
| conrindon | α-Al₂O₃ |
| spinelle | MgO x Al₂O₃, |
où la proportion de spinelle est de 15 - 70% en masse par rapport au produit pulvérulent dans le garnissage de fond.

4. Garnissage de fond selon l'une des revendications précédentes caractérisé en ce que 90% des particules du produit pulvérulent à grains fins présentent un diamètre de particule < 200 µm.

5. Garnissage de fond selon l'une des revendications précédentes caractérisé en ce que le produit pulvérulent à grains fins possède un diamètre de particule moyen de 5 - 30 µm.

6. Garnissage de fond selon l'une des revendications précédentes caractérisé en ce que le garnissage de fond consiste en un composite de couches de corps mis en forme damés de manière monolithique et d'autres matériaux isolants réfractaires.

7. Procédé de fabrication d'un garnissage de fond pour une cuve d'électrolyse où le corps de base de la cuve d'électrolyse est formé par un caisson en acier, caractérisé
a) en ce que, à partir du traitement des crasses et scories salines de l'industrie de l'aluminium, par broyage, lixiviation, filtration et/ou traitement thermique un produit pulvérulent à grains fins ayant la composition chimique suivante, par rapport à la masse de la substance sèche, est préparé:
| | |
|---|---|
| Al₂O₃ | 40 - 90% |
| AlN | 0,1 - 25% |
| MgO | 4 - 20% |
| SiO₂ | 0,5 - 15% |
| CaO | 0,1 - 15% |
| Al (métallique) | 0,1 - 10% |
| Si (métallique) | 0,1 - 10% |
| Fe₂O₃ | 0,1 - 5% |
| C | max. 5% |
| F | max. 5% |
| Na₂O | 0,1 - 5% |
| K₂O | 0,1 - 2% |
| TiO₂ | 0,1 - 2% |
| autres | max. 5% |
| perte au feu | max. 10%, |
b) en ce que le produit pulvérulent est bouleté, briqueté ou extrudé en corps mis en forme,
c) en ce que les corps mis en forme séchés ou calcinés avec moins de 5% d'humidité de perte au feu sont introduits dans le caisson d'électrolyse et sont compactés par damage ou vibrage.

8. Procédé selon la revendication 7 caractérisé en ce que le traitement thermique a lieu par séchage, calcination et/ou frittage.

9. Procédé selon l'une des revendications précédentes caractérisé en ce que le produit pulvérulent est fractionné en particules ayant un diamètre maximal de 200 µm et un diamètre moyen de 5-30 µm.

10. Procédé selon l'une des revendications précédentes caractérisé en ce que le produit pulvérulent est fractionné dans une installation de broyage à boulets.

11. Procédé selon l'une des revendications précédentes caractérisé en ce que des liants inorganiques et/ou organiques sont utilisés lors de la fabrication des corps mis en forme.

12. Procédé selon la revendication 11 caractérisé en ce que l'eau, le ciment, l'argile, le phosphate d'aluminium et/ou la méthylcellulose est/sont utilisés comme liant.

13. Procédé selon l'une des revendications 11 et 12 caractérisé en ce que 5 - 20% d'argile sont utilisés comme liant.

14. Procédé de traitement d'un garnissage de fond usé d'une cuve d'électrolyse de l'aluminium selon l'une des revendications 1 - 6 caractérisé en ce que le garnissage usé est retiré de la cuve d'électrolyse par rupture et, après un broyage, une lixiviation, une filtration, un séchage, une calcination et/ou un frittage, un produit pulvérulent à grains fins dans lequel MgO existe à l'état lié minéralogiquement sous forme de spinelle est obtenu de nouveau.
